# EUROPEAN PATENT SPECIFICATION

(11) **EP 2 746 558 B1**
(45) Date of publication and mention of the grant of the patent: **23.10.2019**
(21) Application number: 12198408.2
(22) Date of filing: 20.12.2012
(51) Int. Cl.: F02D 41/22, F02N 11/10, G01M 15/05, F02D 41/06, F02N 11/08

(54) **System for diagnosing the starting of an internal combustion engine**
System zur Diagnose des Starts eines Verbrennungsmotors
Système permettant de diagnostiquer le démarrage d'un moteur à combustion interne

(43) Date of publication of application: 25.06.2014
(73) Proprietor: IVECO S.p.A., 10156 Torino (IT)
(72) Inventor: Labella, Saverio, 10034 CHIVASSO (IT); Lomaestro, Massimo, 10045 PIOSSASCO (IT); Varalda, Orlando, 10088 VOLPIANO (IT)
(74) Representative: Franzolin, Luigi

(56) References cited:
- DE-A1- 10 243 567
- DE-A1-102007 025 692
- DE-A1-102008 023 837
- US-A1- 2009 309 530
- US-A1- 2012 017 618

## Description

### Application field of the invention

The present invention refers to the field of vehicle diagnostic systems, in particular for diagnosing the starting of internal combustion engines.

### Description of the prior art

Vehicles equipped with internal combustion engines, especially industrial ones, whose engines are subject to heavy use, may be affected by failures during their starting. This may be due, from the one end, to battery exhaustion. From the other end, this may be due to the wear of mechanical parts of the engine which, together with the battery, give a considerable contribution to the engine starting. When the failure in the engine starting occurs, it may be impossible to replace the battery immediately, and, it may be even more difficult to restore the mechanical components that determined the failure. This implies great losses of time and money.

DE 10 2007 025 692 A1 discloses a method for diagnosing the starting of an internal combustion engine.

### Summary of the invention

Therefore the aim of the present invention is to overcome all the aforementioned drawbacks and to indicate a method for diagnosing the starting of an internal combustion engine, to detect the causes of a future failure ahead of time, in order to appropriately prevent them.

A diagnostic method relating to the components in charge of the engine starting is object of the present invention. In other words, the object of the present invention is a method for diagnosing the starting of an internal combustion engine, in accordance with claim 1.

Such method may be at least partially implemented in a vehicle control unit.

When the method is fully implemented in a vehicle control unit, the possible future problem may be signalled to the driver of the vehicle by means of one of the human/machine interfaces on board. On the contrary, when the method is only partially implemented in a vehicle control unit, and the remaining steps of the method are implemented in garage or remote diagnostic tools, then the person in charge of the vehicle maintenance is informed of the problem, preferably with an estimation of the remaining time before a failure will probably occur.

According to the present invention, a continuous monitoring of the starting time of the engine is performed, calculating its tendency.

An increase of the starting time, the temperatures being the same, can indicate the possible wear of vehicle components. It can also indicate a possible future failure.

These indications can support the maintenance or the interventions on one of more components used for the engine starting.

Preferred alternative embodiments of present invention will be described more fully in the claims, that are an integral part of the present invention.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a block diagram of a preferred embodiment of the method that is object the present invention;
figure 2 shows a logic block diagram relating to the components affected by the method according to the present invention.

Dashed connections indicate cable or wireless connections.

In the figures the same reference numbers and letters identify the same elements or components.

### Detailed description of preferred embodiments of the invention

The method that is object of the invention is described hereinafter, such method allowing to perform a continuous monitoring of the functionalities of the components involved in the engine starting.

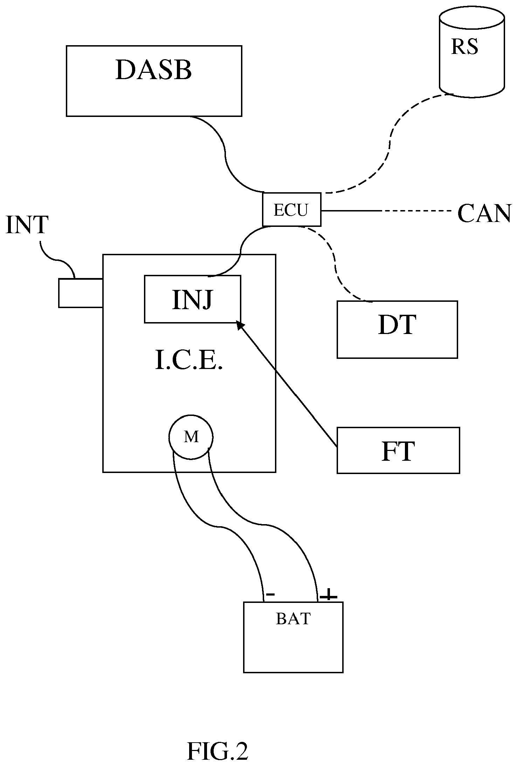

The system acquires physical and/or mechanical quantities and correlates them with a temperature detected in the same instant as the acquisition of the determined quantities. It has been observed, in fact, that the temperature highly influences the efficiency of some components of the internal combustion engine (I.C.E.), among which battery (BAT) and injectors (INJ), see figure 2.

The temperature may be an engine temperature and/or an ambient temperature, for example measured by means of the temperature sensor arranged in the intake duct (INT) or in the container of the urea-based liquid additive used in industrial vehicles, or the temperature measured in the diesel fuel tank FT.

A quantity that is always acquired is the starting time. It defines a relevant discriminant about the possible wear of the components involved in the engine starting.

The time elapsed after sending the activation signal to the starter M and before reaching the engine speed threshold, namely the so-called "starting threshold" beyond which the internal combustion engine is started and increases its speed until it runs at idle, is measured.

The starting time is thus stored according to temperature intervals. Namely as a discrete function of the temperature.

For example, a macro-interval of ambient temperature, for example between -40 and +50, or of engine temperature, for example between -40 and +100, is divided into intervals, for example of 3-5°C, and the starting times are stored as a function of such intervals.

Homogeneous starting times, namely belonging to the same temperature interval, are compared between each other in order to calculate a tendency. For example, linear regressions can be calculated on the basis of acquisitions showing an increasing tendency of the starting time for any temperature interval.

When a tendency proves to be increasing, then it may be necessary to start further procedures to identify the component or the group of components that may presumably cause future failures.

Possible causes of such starting time increase are, for example, due to:
- the pre-heating device of the intake air to the engine, which is generally activated when the ambient temperature is below a certain threshold,
- the fuel injection system and its relative sensors for managing the fuel injection,
- battery efficiency,
- starter M efficiency.

Such further check steps can be performed in relation to the interval(s) affected by the respective increase tendency.

For example, when the temperature interval in which the increase of the starting time has been observed exceeds the threshold that determines the deactivation of the pre-heating device, it is useless to consider the pre-heating device of the intake air. Thus it is worth considering the pre-heating device only when the opposite situation occurs.

According to a preferred alternative embodiment of the present invention, the "motoring" revolutions per minute of the (electric) starter are monitored. The motoring speed is the speed detected an instant before the autonomous starting of internal combustion engine. Such speed is lower than the aforementioned starting threshold. Such instant, according to the present invention, is identified by monitoring the tension and/or the current delivered by the battery. Indeed, when the internal combustion engine starts, the starter idles for a few instants. This results in a reduction of the absorbed current and, correspondingly, in an increase of the battery voltage. Thus, by sampling the starter's speed of rotation it is possible to calculate the aforementioned motoring speed.

If the tendency of the motoring speed of the starter does not show any remarkable decrease, then the problem is presumably connected to the injection or to the sensors managing the injection.

According to a further preferred alterative embodiment of the present invention, the power supply voltage of the vehicle battery is further sampled and, if both the motoring speed and the battery voltage seem to decrease, then there is presumably an electric problem, namely relating to the battery or to the starter (partial short-circuit of the winding, worn brushes, etc.).

If, on the contrary, the motoring speed tends to decrease, while the power supply voltage of the battery does not show any remarkable decrease, then the internal combustion engine has probably a mechanical problem of a different nature, relating to the components of the engine itself or to the devices managing them, for example low compression, or valves that do not open or close well, etc..

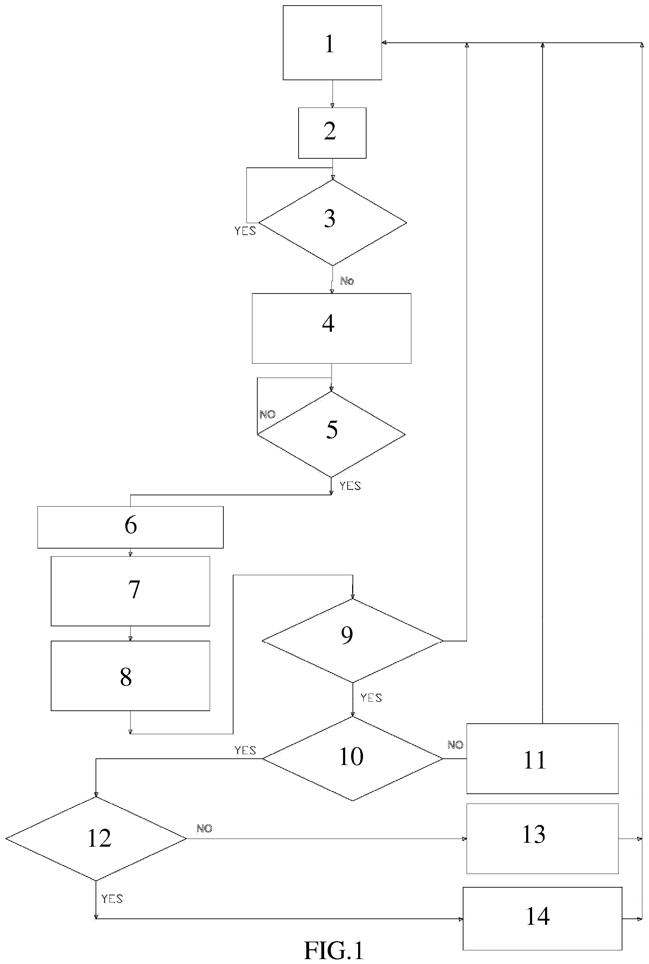

A preferred alternative embodiment of the method is shown by means of the steps of figure 1:
- (step 1) Start, that may correspond to the activation of the dashboard DASB and/or to the activation of the fuel pump (not shown),
- (step 2) acquisition of determinate quantities, among which engine speed, cooling water temperature, diesel fuel temperature, battery voltage,
- (step 3) check whether the engine revolutions per minute are different from zero, until the check is positive, then
- (step 4) (step 3 = YES) activation of the starter and beginning of the sampling of the aforementioned quantities,
- (step 5) check whether the internal combustion engine is started, until the check is positive, namely until the engine revolutions per minute exceed the starting threshold, then
- (step 6) (step 5 = YES) deactivation of the starter, calculation of an average value of the measured values relating to the voltage delivered by the battery and of an average value of the measured value relating to the motoring speed of the starter,
- (step 7) storage of such average value as a function of the temperature, according to a subdivision of temperature intervals,
- (step 8) calculation/update of a tendency for homogeneous temperature values, namely a tendency calculated temperature interval by temperature interval, at least of the interval that is object of said storage,
- (step 9) check whether a tendency relating to the starting time of the internal combustion engine has increased: if it has not increased (step 9 = NO) resumption from the beginning (step 1), otherwise,
- (step 10) (step 9 = YES) check of the tendency of the motoring speed, if no remarkable decrease is detected (step 10 = NO), then
- (step 11) storage and possibly display of a warning message relating to the injection system and its respective sensors, and resumption from the beginning (step 1),
- on the contrary, if the speed tendency shows a remarkable decrease (step 10 = YES), then (step 12) check of the tendency of the voltage delivered by the battery, if no remarkable decrease is detected, preferably during the activation of the starter (step 12 = NO), then
- (step 13) storage and possibly display of a warning message relating to mechanical parts of the internal combustion engine or to the means managing the engine starting, and resumption from the beginning (step 1),
- On the contrary, if the tendency of the power supply voltage of the battery shows a remarkable decrease (step 12 = YES), then (step 14) storage and possibly display of a warning message relating to the vehicle electric part comprising at least the vehicle battery and the starter and resumption of the method from the beginning (step 1).

According to a preferred alternative embodiment of the invention, the tendencies are calculated on the last m values stored, so that they do not weigh too much on the computational burden.

Furthermore it can be noted at the steps 11, 13 and 14 the method is resumed from the beginning. According to a preferred alternative embodiment of the invention. The method is stopped until it is positively reset and restarted by a maintenance operator, for example by means of diagnosis tools suitable to connect to the main control unit ECI or, for example to the CAN vehicle network, or remotely.

According to a further preferred alternative embodiment of the invention, below a predetermined ambient temperature, a preheating device of the air sucked by the engine is activated.

If a storage interval of said average values is lower than said threshold, then at step 11 a message relating to the injection system and to its sensors or to the air pre-heating device is stored or displayed.

Some portions of the method can be carried out on a remote server, or on a diagnostic tool DT that can be connected to the CAN network or directly to the control unit ECI of the vehicle.

Thus an object of the present invention is also such remote server or such diagnostic tool DT suitable, at least, to acquire said homogeneous value of starting time and/or to
- identify a relation between the tendency of the engine motoring speed and the starting time of the engine itself and/or
- acquire said tendency and display one of the aforementioned messages according to the steps 11, 13, 14, and/or
- acquire said messages and display them on a human/machine interface DASB, DT, RS.

When the method it operated, at least partially, by means of a remote server, the latter may be suitable to send a warning message to the vehicle's driver or to the vehicle's owner and/or to the garage in charge of the maintenance of the vehicle.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

From the description set forth above it will be possible for the person skilled in the art to embody the invention with no need of describing further construction details. The elements and the characteristics described in the different preferred embodiments may be combined without departing from the scope of the appended claims. Therefore, alternative embodiments as a combination of the examples described above are also object of the present invention.

## Claims

1. Method for diagnosing the starting of an internal combustion engine comprising:
- internal components of the engine and components managing the functionalities of the engine,
- a vehicle battery to supply power to a starter,
- a fuel injection system,
- a storage means, wherein warning messages can be stored, the method comprising the following steps:
- a starting step (step 1) that corresponds to the activation of a vehicle dashboard and/or of a fuel pump feeding the internal combustion engine;
- an acquisition step (step 2) of determinate quantities, among which engine speed, cooling water temperature, diesel fuel temperature, battery voltage, starting time and the motoring speed of the starter;
- an activation step (step 4) of the starter and beginning of the sampling of the aforementioned quantities;
- a checking step (step 5) to check whether the internal combustion engine has been started based on the engine speed,
- a deactivation step (step 6) of the starter performed when the internal combustion engine has been started;
- a calculation step (step 6) of an average value of the measured battery voltage and of an average value of the measured motoring speed of the starter,
the method being **characterized by** further comprising the following steps:
- a storing step (step 7) of said average values and of said starting time as a discrete function of the temperature, according to a subdivision into a plurality of temperature intervals, the temperatures being either the cooling water temperature or the diesel fuel temperature;
a step (step 8) of calculation/update of tendencies relating to said quantities by considering the last stored quantities which are belonging to the same temperature interval,
- a checking step (step 9) to check whether a tendency relating to the starting time of the internal combustion engine has increased: if the tendency has not increased the method returns to said starting step (step 1) otherwise it is checked (step 10) the tendency of the motoring speed: if no remarkable decrease is observed in the motoring speed (step 10 = NO), then it is (step 11) stored a warning message relating to the injection system and its respective sensors and the method returns to said starting step (step 1); if a remarkable decrease is observed in the motoring speed (step 10 = YES), then it is checked (step 12) the tendency of the battery voltage : if no remarkable decrease is observed in the battery voltage tendency (step 12 = NO), then it is (step 13) stored a warning message relating to mechanical parts of the internal combustion engine or to the means managing the engine starting, and resumption from the beginning; if a remarkable decrease is observed in the battery voltage tendency (step 12 = YES) then (step 14) it is stored a warning message relating to the vehicle electric part comprising at least the vehicle battery and the starter and the method returns to said starting step (step 1).

2. Vehicle control unit (ECI) comprising processing means configured to perform the steps of claim 1.

3. Computer program comprising program code means adapted for performing all the steps of claim 1, when such program is run on a computer in a vehicle control unit according to claim 2.

4. Internal combustion engine comprising a vehicle control unit according to claim 2.

5. Vehicle comprising an internal combustion engine according to claim 4.

## Patentansprüche

1. Verfahren zur Diagnose des Starts eines Verbrennungsmotors, umfassend:
- interne Komponenten des Motors und Komponenten, welche die Funktionen des Motors steuern,
- eine Fahrzeugbatterie, um einen Anlasser mit Energie zu versorgen,
eine Einspritzanlage,
- Speichermittel, in denen Warnmeldungen gespeichert werden können,
welches Verfahren die folgenden Schritte umfasst:
- einen Anfangsschritt (Schritt 1), welcher der Aktivierung eines Fahrzeugarmaturenbrettes und/oder einer Treibstoffpumpe, welche den Verbrennungsmotor speist, entspricht;
- einen Erfassungsschritt (Schritt 2) der Bestimmung von Messgrößen, darunter Motordrehzahl, Kühlwassertemperatur, Dieselkraftstofftemperatur, Batteriespannung, Startzeit und die Motordrehzahl des Anlassers;
- einen Aktivierungsschritt (Schritt 4) des Anlassers und Beginn der Messung der zuvor genannten Messgrößen;
- ein Kontrollschritt (Schritt 5), um zu kontrollieren, ob der Verbrennungsmotor gestartet wurde, auf Grundlage der Motordrehzahl;
- ein Deaktivierungsschritt (Schritt 6) des Anlassers, der durchgeführt wird, wenn der Verbrennungsmotor gestartet wurde;
- ein Berechnungsschritt (Schritt 6) eines Durchschnittswertes der gemessenen Batteriespannung und eines Durchschnittswertes der gemessenen Motordrehzahl des Anlassers,
welches Verfahren ferner **gekennzeichnet ist durch** die folgenden Schritte:
- ein Speicherschritt (Schritt 7) der Durchschnittswerte und der Startzeit als diskrete Funktion der Temperatur, gemäß einer Unterteilung in eine Mehrzahl von Temperaturintervallen, welche Temperaturen entweder die Kühlwassertemperatur oder die Dieselkraftstofftemperatur sind;
- ein Schritt (Schritt 8) der Berechnung/Aktualisierung von Tendenzen betreffend die Messgrößen unter Berücksichtigung der zuletzt gespeicherten Messgrößen, welche zum gleichen Temperaturintervall gehören;
- ein Kontrollschritt (Schritt 9), um zu kontrollieren, ob eine Tendenz in Bezug auf die Startzeit des Verbrennungsmotors zugenommen hat: falls die Tendenz nicht zugenommen hat, geht das Verfahren zurück auf den Anfangsschritt (Schritt 1), ansonsten wird (Schritt 10) die Tendenz der Motorgeschwindigkeit kontrolliert: falls keine erhebliche Abnahme der Motorgeschwindigkeit beobachtet wird (Schritt 10 = NEIN), dann wird (Schritt 11) eine Warnmeldung betreffend das Einspritzsystem und seine jeweiligen Sensoren gespeichert und das Verfahren geht zurück auf den Anfangsschritt (Schritt 1); falls eine erhebliche Abnahme der Motorgeschwindigkeit beobachtet wird (Schritt 10 = JA), dann wird (Schritt 12) die Tendenz der Batteriespannung kontrolliert: falls keine erhebliche Abnahme der Tendenz der Batteriespannung beobachtet wird (Schritt 12= NEIN), dann wird (Schritt 13) eine Warnmeldung betreffend die mechanischen Teile des Verbrennungsmotors oder betreffend die Mittel, welche das Starten des Motors steuern, gespeichert, und das Verfahren wird von Anfang an wiederholt; falls eine erhebliche Abnahme der Batteriespannung beobachtet wird (Schritt 12= JA), dann (Schritt 14) wird ein Warnmeldung betreffend die elektrischen Fahrzeugteile, umfassend mindestens die Fahrzeugbatterie und den Anlasser, gespeichert und das Verfahren geht zurück auf den Anfangsschritt (Schritt 1).

2. Motorsteuerungseinheit (ECI), umfassend Verarbeitungsmittel, konfiguriert, um alle Schritte von Anspruch 1 auszuführen.

3. Computerprogramm, umfassend Programmcode, geeignet, um alle Schritte von Anspruch 1 auszuführen, wenn ein solches Programm auf einem Computer in einer Motorsteuerungseinheit nach Anspruch 2 ausgeführt wird.

4. Verbrennungsmotor, umfassend eine Motorsteuerung nach Anspruch 2.

5. Fahrzeug, umfassend einen Verbrennungsmotor nach Anspruch 4.

## Revendications

1. Méthode pour diagnostiquer le démarrage d'un moteur à combustion interne comprenant :
- des composants internes du moteur et des composants gérant les fonctionnalités du moteur,
- une batterie de véhicule pour fournir de l'énergie à un démarreur,
- un système d'injection de carburant,
- un moyen de stockage, dans lequel des messages d'avertissement peuvent être stockés,
la méthode comprenant les étapes suivantes :
- une étape de démarrage (étape 1) qui correspond à l'activation d'un tableau de bord de véhicule et/ou d'une pompe à carburant alimentant le moteur à combustion interne ;
- une étape d'acquisition (étape 2) de quantités déterminées, parmi lesquelles la vitesse de moteur, la température d'eau de refroidissement, la température de gazole, la tension de batterie, le temps de démarrage et la vitesse d'entraînement du démarreur ;
- une étape d'activation (étape 4) du démarreur et de début de l'échantillonnage des quantités susmentionnées ;
- une étape de vérification (étape 5) pour vérifier si le moteur à combustion interne a été démarré sur la base de la vitesse de moteur,
- une étape de désactivation (étape 6) du démarreur réalisée lorsque le moteur à combustion interne a été démarré ;
- une étape de calcul (étape 6) d'une valeur moyenne de la tension de batterie mesurée et d'une valeur moyenne de la vitesse d'entraînement mesurée du démarreur,
la méthode étant **caractérisée en ce qu'**elle comprend en outre les étapes suivantes :
- une étape de stockage (étape 7) desdites valeurs moyennes et dudit temps de démarrage en tant que fonction discrète de la température, en fonction d'une subdivision en une pluralité d'intervalles de température, les températures étant soit la température d'eau de refroidissement soit la température de gazole ;
- une étape (étape 8) de calcul/mise à jour de tendances se rapportant auxdites quantités en prenant en compte les dernières quantités stockées qui appartiennent au même intervalle de température,
- une étape de vérification (étape 9) pour vérifier si une tendance se rapportant au temps de démarrage du moteur à combustion interne a augmenté : si la tendance n'a pas augmenté, la méthode retourne à ladite étape de démarrage (étape 1) sinon la tendance de la vitesse d'entraînement est vérifiée (étape 10) : si aucune diminution remarquable n'est observée dans la vitesse d'entraînement (étape 10 = NON), alors un message d'avertissement se rapportant au système d'injection et à ses capteurs respectifs est stocké (étape 11) et la méthode retourne à ladite étape de démarrage (étape 1) ; si une diminution remarquable est observée dans la vitesse d'entraînement (étape 10 = OUI), alors la tendance de la tension de batterie est vérifiée (étape 12) : si aucune diminution remarquable n'est observée dans la tendance de tension de batterie (étape 12 = NON), alors un message d'avertissement se rapportant aux parties mécaniques du moteur à combustion interne ou aux moyens gérant le démarrage de moteur est stocké (étape 13), et reprise à partir du début ; si une diminution remarquable est observée dans la tendance de la tension de batterie (étape 12 = OUI), alors un message d'avertissement se rapportant à la partie électrique de véhicule comprenant au moins la batterie de véhicule et le démarreur est stocké (étape 14) et la méthode retourne à ladite étape de démarrage (étape 1).

2. Unité de commande de véhicule (ECI) comprenant des moyens de traitement configurés pour réaliser les étapes selon la revendication 1.

3. Programme d'ordinateur comprenant des moyens de code de programme conçus pour réaliser toutes les étapes selon la revendication 1, lorsqu'un tel programme est exécuté sur un ordinateur dans une unité de commande de véhicule selon la revendication 2.

4. Moteur à combustion interne comprenant une unité de commande de véhicule selon la revendication 2.

5. Véhicule comprenant un moteur à combustion interne selon la revendication 4.
